# FASCICULE DE BREVET EUROPEEN

(11) **EP 0 672 641 B1**
(45) Date de publication et mention de la délivrance du brevet: **29.08.2001**
(21) Numéro de dépôt: 95400432.1
(22) Date de dépôt: 28.02.1995
(51) Int. Cl.: C05F 3/00

(54) **Procédé de traitement du lisier de porc et produit obtenu à partir dudit procédé**
Verfahren zur Behandlung von Schweinegülle und so erhaltenes Produkt
Process for the treatment of liquid pig manure and product thus obtained

(30) Priorité: 10.03.1994 FR 9402797
(43) Date de publication de la demande: 20.09.1995
(73) Titulaire: SC Kheper Biotechnologies, 91270 Vigneux sur Seine (FR)
(72) Inventeur: Marchese, Edoardo, F-78230 Le Pecq (FR)
(74) Mandataire: Tanguy, Gilbert André

(56) Documents cités:
- EP-A- 0 201 722
- WO-A-93/23349
- DE-A- 3 826 873
- GB-A- 1 118 563
- GB-A- 2 129 785
- GB-A- 2 167 398
- A.H. DIRKZWAGER ET AL. 'Sewage Sludge Treatment and Use: New Developments, Technological Aspects and Environmental Effects' 1988 , ELSEVIER APPLIED SCIENCE , LONDON, UK * page 502 *
- CHEMICAL ABSTRACTS, vol. 100, no. 17, 23 Avril 1984, Columbus, Ohio, US; abstract no. 138129p, I. PENTEK ET AL. 'Conversion of liquid manure and wastewaters into liquid fertilizer.' page 566 ; & HU-A-28 759 (VASIPARI KUTATO INTEZET ET AL.)

## Description

La présente invention a pour objet un procédé de traitement du lisier de porc désodorisé, de façon à le transformer en engrais.

Dans la technique antérieure, on connaît un procédé pour traiter le lisier de porc, afin de le désodoriser. Ce procédé est plus particulièrement connu sous la dénomination "traitement de nitrification/dénitrification". En fait, grâce à la présence de micro-organismes dont le développement est favorisé par l'oxygène de l'air, c'est-à-dire que l'on développe une technique aérobique, le lisier de porc se transforme en un liquide sans odeur qui est constitué d'une solution d'éléments et de composés comportant de l'azote, du phosphore, du potassium et autres composés, tout en présentant une partie colloïdale organique en suspension dans ce milieu liquide. L'azote ammoniacal, qui est le responsable principal de l'odeur diminue d'environ 95% avec ce traitement. Le lisier de porc ainsi traité peut être utilisé pour l'épandage dans les champs sans inconvénient du point de vue de l'odeur.

Toutefois ce produit présente des limites d'utilisation comme engrais, du fait que, d'une part, les réglementations en vigueur limitent la quantité et la fréquence des épandages dans les champs et que, d'autre part, l'engrais n'est pas équilibré du point de vue de la composition chimique entre les trois éléments typiques qui constituent un engrais, à savoir l'azote, le phosphore et le potassium. Par ailleurs le liquide est difficilement transportable, présente une tendance à la décantation, ce qui complique un épandage homogène, et, de plus, sa manipulation est compliquée. Il en résulte que le lisier de porc, même à l'état désodorisé, est difficilement utilisable loin du lieu d'élevage des porcins.

Parmi les documents illustrant la technique antérieure, on peut citer la demande de brevet britannique GB-A-2167398 qui se rapporte à la préparation d'un support de culture à l'aide d'éléments type terre, terreau, sable, mélangés avec un polymère qui a absorbé des éléments fertidlisants. Ce polymère est identifié par le biais d'une coloration pour le distinguer du reste du mélange, ainsi que la demande de brevet britannique GB-A-2129785 dans lequel est décrit un mélange mécanique d'engrais granulaire avec un polymère. Cet engrais qui n'est pas bloqué in situ est utilisé, comme matière première principale, les algues et les déchets organiques, y compris les déchets provenant du règne animal.

Un objet de la présente invention est donc d'obvier aux inconvénients mentionnés ci-dessus, en proposant un procédé, issu d'une technologie qui permet de transformer le lisier de porc désodorisé en engrais complet solide et équilibré entre tous ses composants, à savoir principalement l'azote, le phosphore et le potassium, cet engrais étant soumis à un traitement de dessiccation ce qui le rend facilement maniable et transportable.

Un autre objet de l'invention est de proposer un procédé de fabrication d'un engrais qui, par ses caractéristiques physiques et chimiques satisfasse aux normes de pollution en vigueur dans le monde, notamment en France et dans les pays de la Communauté Européenne.

La présente invention a donc pour objet le procédé de traitement d'une suspension liquide de lisier de porc désodorisé, pour la transformer en engrais sous forme solide, caractérisé en ce que l'on ajoute à la suspension liquide de lisier désodorisé une solution de pentoxyde de phosphore et d'oxyde de potassium en proportions appropriées pour obtenir dans le produit final le rapport souhaité entre l'azote, le phosphore et le potassium, et en fonction de la nature du sol et du type d'application, après quoi on mélange la suspension obtenue avec un polymère choisi parmi les dérivés simples ou réticulés des polyacrylamides et
susceptible de retenir de l'eau, sous forme de granulés, de façon à obtenir un engrais conformé et conditionné en granulés, que l'on soumet à un traitement de dessiccation, pour obtenir un engrais sous forme de granulé, bloqué in situ.

Le procédé objet de la présente invention est en outre remarquable par les points suivants :

L'invention vise également un produit sous forme de granulés secs, obtenu selon le procédé décrit ci-dessus et comportant de 8 à 30% de matières minérales totales, de 4 à 10% de matières organiques, de 4 à 10% d'azote total, de 4 à 10% de phosphore (P₂0₅), de 2 à 10% de potassium (K₂0), de 0,3 à 0,5% d'azote ammoniacal, le reste étant un polymère susceptible de retenir de l'eau, choisi parmi les dérivés simples ou véhiculés des polyacrylamides.

D'autres caractéristiques et avantages de la présente invention apparaîtront à la lecture de l'exemple de, préparation suivant d'un engrais fabriqué à partir de lisier de porc en mettant en oeuvre le procédé de l'invention. Cet exemple est donné à titre uniquement illustratif et ne limite en rien la portée de l'invention.

### Exemple :

On utilise comme matière première, un lisier de porc désodorisé selon la technique de nitrification/dénitrification, dont il a été question ci-dessus.

On ajoute à ce lisier une solution de pentoxyde de phosphore et d'oxyde de potassium, calculée sur la base du rapport qu'on veut obtenir dans le produit final entre l'azote, le phosphore et le potassium.

On obtient une suspension que l'on mélange avec un polymère rétenteur d'eau, par exemple un polyacrylamide linéaire ou réticulé. Ce polymère qui se présente à l'état sec comme un granulé transparent de 2 à 3 mm de diamètre présente la propriété de gonfler en absorbant des phases aqueuses au travers de ses parois semi-perméables.

C'est ainsi que la solution aqueuse à base d'azote, de pentoxyde de phosphore et d'oxyde de potassium, cette solution constituant la composante principale du lisier, pénètre à l'intérieur du granulé et le gonfle. Pendant cette pénétration, la partie organique en suspension dans le lisier se dépose sur la surface du granulé gonflé.

Dès que la masse des granulés a absorbé la totalité de la solution issue du lisier, les granulés sont soumis à une technique de dessiccation, par exemple avec de l'air chaud pulsé. Une fois ce traitement terminé, les granulés séchés reprennent leur forme et dimension d'origine. Ils renferment à l'intérieur les éléments chimiques complets d'un engrais et ils sont enrobés par une couche mince constituée des éléments organiques qui formaient la suspension colloïdale, riche, elle aussi, en éléments fertilisants. Il est à noter que les éléments et composants chimiques principaux et essentiels restent confinés à l'intérieur des granulés. Les granulations obtenues constituent un excellent engrais qui possède deux caractéristiques essentielles ; en premier lieu de libérer lentement les principes actifs y enfermés et, en second lieu, de ne pas être sujet, dans le cas de pluies torrentielles, à une action de transfert vers les cours d'eau et vers les nappes phréatiques.

En application, lorsque les granulés à l'état sec sont épandus sur le sol, par exemple dans la proportion de 20 à 30g/m² puis mélangés avec de la terre jusqu'à une profondeur de 20cm, ils gonflent en présence d'eau, par exemple provenant d'une pluie ou d'une technique d'irrigation, ce qui les fait augmenter de volume plusieurs centaines de fois. La couche extérieure des granulés, sur laquelle est déposée la partie colloïdale de la solution de lisier traitée, reprend son aspect colloïdal et elle est immédiatement utilisable, en tant qu'engrais, par les plantes qui peuvent se nourrir de ses éléments nutritifs.

On notera que la paroi semi-perméable du granulé, cette semi-perméabilité étant une des caractéristique des polymères rétenteurs d'eau, permet l'entrée très rapide d'une phase aqueuse, par exemple de l'eau de pluie, et une sortie très lente de cette phase aqueuse, évidemment modifiée par l'incorporation d'éléments fertilisants. Les racines des plantes peuvent également pénétrer à l'intérieur des granulés où elles trouvent les éléments fertilisants y contenus.

Lorsque le granulé sèche en ayant perdu l'eau qu'il renferme, une nouvelle pluie ou un arrosage le fait gonfler à nouveau et on a donc dans le sol la formation de petites réserves d'eau enrichies avec les éléments fertilisants. Le cycle se répète pendant un temps qui est fonction du polymère rétenteur d'eau choisi et de beaucoup d'autres facteurs, qui sont difficiles à contrôler. La vie du produit est estimée entre trois et cinq ans avec une lente biodégradation.

Ce mécanisme des granulés dans lesquels l'eau peut pénétrer très facilement et en sortir très lentement, a l'avantage que, en cas d'une forte pluie, l'élément fertilisant ne sort pas et ne va pas polluer les rivières et les nappes phréatiques. On peut donc estimer qu'avec ce système, on transforme le lisier de porc en un engrais complet, propre, inodore, facile à stocker, et présentant un avantage écologique essentiel à l'égard des autres engrais qui sont, en grande partie, emportés par l'eau de ruissellement, en cas de très fortes pluies ou d'irrigations abondantes.

On donnera après un exemple de formulation non limitatif :

Pour réaliser un engrais selon l'invention, on prend quatre parts en poids de lisier de porc désodorisé. Ce lisier présente la composition suivante :
- matières sèches : 4,8% ;
- matières minérales totales : 2,0% ;
- matières organiques : 2,8% ;
- azote total (principalement sous forme d'urée) : 0,16% ;
- phosphore (principalement sous la forme de pentoxyde de phosphore) : 0,36% ;
- potassium (principalement sous la forme d'oxyde de potassium) : 0,46% ;
- azote ammoniacal : 0,013%.

On mélange ce lisier avec une part d'une solution chelatée de P₂0₅ ET DE K₂0 distribuée par la Société NPK+.

Dès que la masse est bien homogénéisée, on ajoute deux parties en poids d'un polymère acrylique vendu sous la dénomination commerciale Aquastore par American Cyanamid.

On laisse gonfler la masse pendant quelques minutes après quoi on la soumet à un traitement de dessiccation jusqu'à ce qu'on obtienne un granulé parfaitement sec. Le produit est conservé en évitant tout contact avec l'air, du fait de la forte hygroscopicité.

Il est clair que l'invention n'est nullement limitée à l'exemple décrit ci-dessus, mais qu'elle englobe toutes les modifications et variantes issues du même principe de base.

C'est ainsi que n'importe quel autre polymère susceptible de retenir de l'eau ou une phase aqueuse peut être utilisé pour cette application.

## Revendications

1. Procédé de traitement d'une suspension liquide de lisier de porc désodorisé, pour la transformer en engrais sous forme solide, **caractérisé en ce que** l'on ajoute à la suspension liquide de lisier désodorisé une solution de pentoxyde de phosphore et d'oxyde de potassium en proportions appropriées pour obtenir dans le produit final le rapport souhaité entre l'azote, le phosphore et le potassium, et en fonction de la nature du sol et du type d'application, après quoi on mélange la suspension obtenue avec un polymère choisi parmi les dérivés simples ou réticulés des polyacrylamides et susceptible de retenir de l'eau, sous forme de granulés, de façon à obtenir un engrais conformé et conditionné en granulés, que l'on soumet à un traitement de dessiccation, pour obtenir un engrais sous forme de granulé, bloqué in situ.

2. Produit sous forme de granulés secs, obtenu selon la revendication 1.

3. Produit selon la revendication 2, **caractérisé en ce que** chaque granulé comporte 8 à 30% de matières minérales totales, de 4 à 10% de matières organiques, de 4 à 10% d'azote total, de 4 à 10% de phosphore (P₂0₅), de 2 à 10% de potassium (K₂0), de 0,3 à 0,5% d'azote ammoniacal, le reste étant un polymère susceptible de retenir de l'eau, choisi parmi les dérivés simples ou réticulés des polyacrylamides.

## Patentansprüche

1. Behandlungsverfahren für eine flüssige Suspension desodorisierter Schweinegülle zwecks ihrer Verarbeitung zu Dünger in fester Form, **dadurch gekennzeichnet**, dass der flüssigen Suspension desodorisierter Gülle eine Lösung aus Phosphorpentoxid und Kaliumoxid in angemessenen Proportionen hinzugefügt wird, um in dem Endprodukt unter Berücksichtigung der Bodenverhältnisse und der Anwendungsart das gewünschte Verhältnis zwischen Stickstoff, Phosphor und Kalium zu erhalten, woraufhin die erhaltene Suspension mit einem unter den einfachen oder vernetzten Polyacrylamidderivaten ausgewählten Polymer in Körnerform, das in der Lage ist, Wasser zurückzuhalten, so vermischt wird, dass ein in Körnern geformter und konditionierter Dünger entsteht, den man einer Trocknungsbehandlung unterzieht, um einen Dünger in Körnerform zu erhalten, der in situ blockiert wird.

2. Produkt in Form trockener Körner, das nach dem Anspruch 1 erhalten wird.

3. Produkt nach Anspruch 2, **dadurch gekennzeichnet**, dass jedes Granulat 8 % bis 30 % Gesamtmineralstoffe enthält, 4 % bis 10 % organische Stoffe, 4 % bis 10 % Gesamtstickstoff, 4 % bis 10 % Phosphor (P₂0₅), 2 % bis 10 % Kalium (K₂0), 0,3 % bis 0,5 % Ammoniakstickstoff, und der Rest ein unter den einfachen oder vernetzten Polyacrylamiden ausgewähltes Polymer darstellt, das in der Lage ist, Wasser zurückzuhalten.

## Claims

1. Procedure for the treatment of a liquid suspension of deodorised pig manure, to transform it into solid fertiliser, **characterised in that** a solution of the appropriate proportions of phosphorus pentoxide and potassium oxide is added to the liquid suspension of deodorised manure so that the final product contains the desired ratio between nitrogen, phosphorus and potassium, and as a function of the type of floor and type of application, after which the suspension obtained is mixed with a polymer chosen from among simple or cross-linked polyacrylamide derivatives and is able to retain water, in granule form, so as to obtain a fertiliser that is formed and packed in granules, that is subjected to a desiccation treatment, to obtain a fertiliser in granule form, blocked in situ.

2. Product in the form of dry granules, obtained according to claim 1.

3. Product according to claim 2, **characterised in that** each granule contains 8 to 30 % total mineral matter, 4 to 10 % organic matter, 4 to 10 % total nitrogen, 4 to 10 % phosphorus (P₂O₅), 2 to 10 % potassium (K₂O), 0.3 to 0.5 % ammonia nitrogen, the remainder being a polymer able to retain water, chosen from among the simple or cross-linked polyacrylamide derivatives.
